# FASCICULE DE BREVET EUROPEEN

(11) **EP 3 223 398 B1**
(45) Date de publication et mention de la délivrance du brevet: **19.12.2018**
(21) Numéro de dépôt: 17162617.9
(22) Date de dépôt: 23.03.2017
(51) Int. Cl.: H02K 3/52, H02K 5/22, H02K 7/14, H02K 11/33

(54) **COMPRESSEUR DE SURALIMENTATION ELECTRIQUE COMPRENANT UN DISPOSITIF DE CONNEXION ELECTRIQUE**
ELEKTRISCHER AUFLADER MIT EINER VORRICHTUNG ZUR ELEKTRISCHEN VERBINDUNG
ELECTRICAL SUPERCHARGER COMPRISING A DEVICE FOR ELECTRICAL CONNECTION

(30) Priorité: 23.03.2016 FR 1652481
(43) Date de publication de la demande: 27.09.2017
(73) Titulaire: Valeo Systemes de Controle Moteur, 95800 Cergy Saint Christophe (FR)
(72) Inventeur: HODEBOURG, Grégory, 95892 CERGY PONTOISE (FR); SOHIER, Yannick, 95892 CERGY PONTOISE (FR); WALME, Benoît, 94046 CRETEIL (FR)
(74) Mandataire: Cardon, Nicolas

(56) Documents cités:
- EP-A1- 2 913 909
- US-A1- 2013 141 871

## Description

La présente invention concerne un compresseur de suralimentation électrique, et plus particulièrement un compresseur de suralimentation électrique comportant un dispositif de connexion électrique.

Dans le cadre de l'invention, un compresseur de suralimentation électrique est un dispositif, utilisé pour suralimenter un moteur thermique, et fonctionnant avec une machine électrique. Plus précisément, le compresseur comporte une roue de compression entrainée par la machine électrique.

Typiquement, un compresseur de suralimentation électrique est placé sur la ligne d'admission d'air d'un moteur à combustion interne, notamment d'un véhicule, en complément d'un turbocompresseur. Le compresseur de suralimentation électrique joue le même rôle que le turbocompresseur, à savoir augmenter la pression d'admission des gaz frais dans le moteur à combustion interne, mais est utilisé notamment lors des phases transitoires pour palier aux problèmes de temps de réponse du turbocompresseur.

Un convertisseur de tension permet de commander l'énergie alimentant la machine électrique du compresseur. Il est connu d'intégrer ce convertisseur de tension dans le compresseur avec la machine électrique. Par exemple, la demande de brevet européen EP 2 913 909 A1 décrit un tel compresseur de suralimentation électrique qui comprend d'une part un dispositif de connexion électrique entre la machine électrique et le convertisseur de tension, et d'autre part un dispositif de connexion électrique entre le convertisseur de tension et le réseau électrique. Pour améliorer l'intégration du compresseur dans le véhicule, notamment avec le moteur à combustion interne, il est nécessaire de maitriser son encombrement et de faciliter son assemblage. En particulier, les connexions électriques entre la machine électrique, le convertisseur de tension et le réseau électrique alimentant le compresseur peuvent être complexes à réaliser.

Il est donc recherché un compresseur de suralimentation électrique qui présente un agencement de ses composants facilitant son assemblage.

A cet effet, il est proposé un compresseur de suralimentation électrique, notamment pour véhicule automobile, comprenant :
- une roue de compression de gaz ;
- une machine électrique tournante configurée pour entrainer la roue de compression de gaz ;
- un convertisseur de tension configuré pour alimenter ladite machine électrique à partir d'un réseau électrique ;
- un dispositif de connexion électrique comprenant un conducteur d'alimentation configuré pour relier électriquement le convertisseur de tension avec le réseau électrique et au moins un conducteur de phase configuré pour relier électriquement le convertisseur de tension à une phase de la machine électrique,
ledit dispositif de connexion comprenant un corps surmoulant ensemble ledit conducteur d'alimentation et ledit conducteur de phase.

Ainsi, le conducteur d'alimentation et le conducteur de phase sont intégrés dans un même dispositif de connexion. Lors de l'assemblage du compresseur, en positionnant le dispositif de connexion, on place à la fois le conducteur d'alimentation et le conducteur de phase, les plaçant ainsi dans une même étape de fabrication, ce qui facilite l'assemblage du compresseur. En outre, on diminue le coût de fabrication puisque les connecteurs sont dans un seul dispositif au lieu de deux dans l'art antérieur.

Selon un mode de réalisation, le corps du dispositif de connexion s'étend principalement suivant un plan, dit plan principal, lesdits conducteurs d'alimentation et de phase étant surmoulés au niveau de ce plan.

Selon un mode de réalisation, le dispositif de connexion s'étend autour de l'axe de rotation de la machine.

Selon un mode de réalisation, le dispositif de connexion s'étend entre une première distance radiale et une deuxième distance radiale par rapport à l'axe de rotation de la machine.

Selon un mode de réalisation, le dispositif de connexion comprend une pluralité de conducteurs de phase, et la machine comprend des bornes de phase configurées pour être connectées avec les conducteurs de phase, lesdites bornes de phase étant positionnées autour de l'axe de rotation de la machine.

Selon un mode de réalisation, les bornes de phase sont positionnées suivant une circonférence autour de l'axe de la machine, ladite circonférence étant interne radialement par rapport audit dispositif de connexion.

Selon un mode de réalisation, le dispositif de connexion et le convertisseur de tension sont deux pièces différentes.

Selon un mode de réalisation, le convertisseur de tension comprend un module de puissance comportant des interrupteurs destinés à recevoir une énergie alimentant la machine électrique, le dispositif de connexion et le module de puissance étant deux pièces différentes supportées sur une même surface.

Selon un mode de réalisation, le convertisseur de tension est placé entre la machine électrique et la roue de compression. Notamment, le dispositif de connexion est placé entre la machine électrique et la roue de compression.

Selon un mode de réalisation, le convertisseur de tension est placé à une extrémité axiale du compresseur de suralimentation. Notamment, le dispositif de connexion est placé entre la machine électrique et la roue de compression.

L'invention sera mieux comprise en faisant référence aux dessins, dans lesquels :
- la figure 1 illustre un exemple de compresseur de suralimentation électrique selon un mode de réalisation de l'invention ;
- les figures 2 et 3 présentent des vues partielles en perspective et du dessus d'un compresseur de suralimentation électrique selon un mode de réalisation de l'invention ;
- la figure 4 présente une vue de dessus schématique d'un compresseur de suralimentation électrique selon un mode de réalisation ;
- la figure 5 présente une vue en coupe d'un compresseur de suralimentation électrique selon un mode de réalisation.

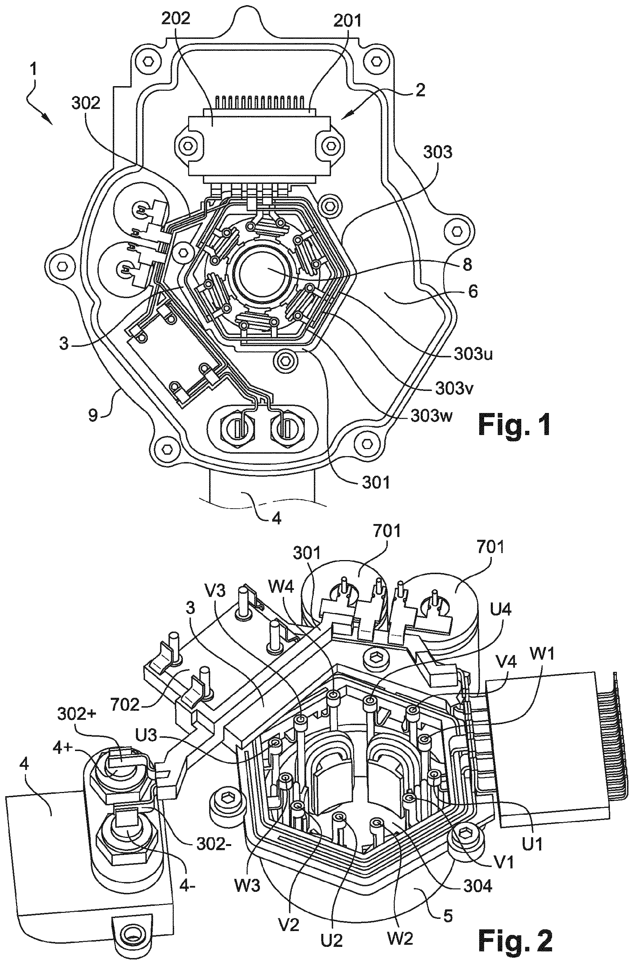

La figure 1 illustre un exemple de compresseur de suralimentation électrique 1 selon un mode de réalisation.

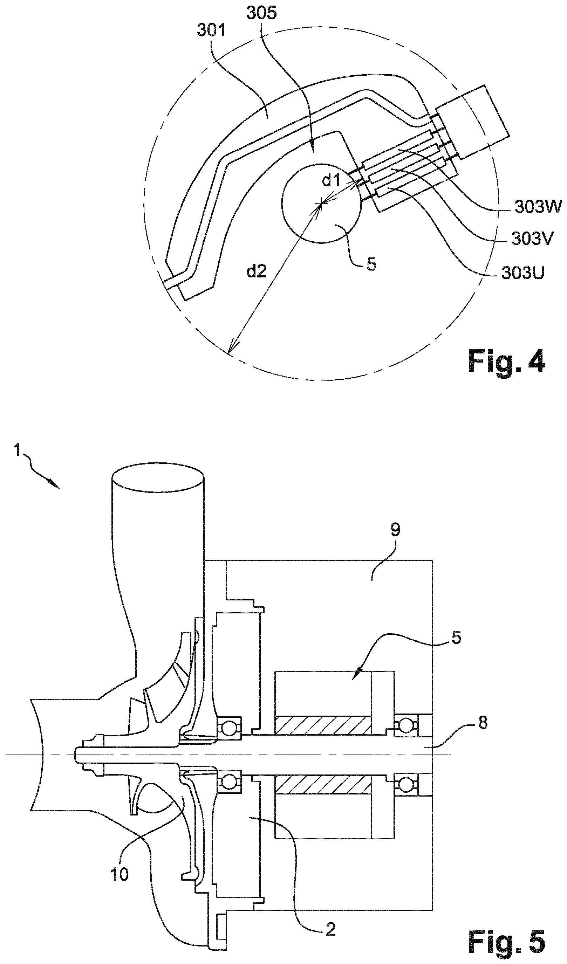

Le compresseur de suralimentation 1 comprend une roue de compression, illustrée par exemple en figure 4, destinée à comprimer l'air d'admission d'un moteur à combustion en association duquel le compresseur de suralimentation 1 est monté. La roue de compression est entrainée en rotation par une machine électrique 5. Un convertisseur de tension 2 alimente la machine électrique à partir d'un réseau électrique. Notamment, le compresseur de suralimentation 1 est configuré pour être embarqué dans un véhicule pour comprimer les gaz d'admission du moteur à combustion du véhicule. En particulier, le réseau électrique est un réseau électrique du véhicule et comprend une batterie alimentant ledit réseau.

Le convertisseur de tension 2 peut comprendre un module de puissance 201 qui comprend des interrupteurs, notamment des interrupteurs semi-conducteurs, par exemple des transistors IGBT ou MOSFET. Les interrupteurs sont notamment configurés pour recevoir un courant alimentant la machine électrique 5.

Le compresseur de suralimentation 1 comprend un dispositif de connexion électrique 3 qui assure une connexion électrique entre la machine électrique et le convertisseur de tension 2 et entre le convertisseur de tension 2 et le réseau électrique, en particulier avec un connecteur 4 destiné à être relié avec le réseau électrique. A cet effet, le dispositif de connexion 3 comprend un corps 301 qui surmoule un conducteur d'alimentation 302 et des conducteurs de phase 303u, 303v, 303w. Le conducteur d'alimentation 302 connecte électriquement le convertisseur de tension 2 avec le réseau électrique. En particulier, le conducteur d'alimentation 302 achemine une énergie électrique entre le réseau électrique et le convertisseur de tension 2, ladite énergie électrique étant destinée à alimenter la machine électrique 5. Les conducteurs de phase 303u, 303v, 303w connectent électriquement le convertisseur de tension 2 aux phases de la machine électrique 5. En particulier, les conducteurs de phase 303u, 303v, 303w sont configurés pour acheminer une énergie électrique entre le convertisseur de tension 2 et la machine électrique 5 pour alimenter la machine électrique 5. Ainsi, le corps 301 maintient ensemble à la fois le conducteur d'alimentation 302 et les conducteurs de phase 303u, 303v, 303w ce qui permet de les monter dans le compresseur de suralimentation 1 en même temps. Le corps 301 comprend des points de fixation pour les deux types de connecteurs 302, 303u, 303v, 303w, ce qui permet d'avoir moins de points de fixation que si les connecteurs étaient séparés.

Notamment, le conducteur d'alimentation 302 comprend une lame conductrice électriquement 302+ configurée pour être reliée à une borne positive 4+ du réseau électrique, et une lame conductrice électriquement 302- configurée pour être reliée à une borne négative 4- du réseau électrique. En particulier, la lame positive 302+ et la lame négative 302- comprennent chacune une borne qui va être connectée aux interrupteurs du convertisseur de tension 2 configurés pour recevoir un courant alimentant la machine électrique 5, notamment au module de puissance 201.

Notamment, les conducteurs de phase 303u, 303v, 303w sont en forme de lame conductrice électriquement. En particulier, chaque conducteur de phase 303u, 303v, 303w comprend une borne configurée pour être connectée aux interrupteurs du convertisseur de tension 2 qui reçoivent un courant alimentant la machine électrique 5, notamment au module de puissance 201. Chaque conducteur de phase 303u, 303v, 303w peut comprendre également une ou plusieurs bornes connectées à une phase de la machine 5. En particulier, le dispositif de connexion électrique 3 comprend un connecteur pour chaque phase de la machine électrique 5. Dans les exemples représentés la machine électrique 5 est triphasée. Le dispositif de connexion électrique 3 comprend donc trois conducteurs de phases 303u, 303v, 303w. Cependant, le dispositif de connexion électrique 3 pourrait comprendre moins ou plus de conducteurs de phase en fonction du nombre de phases de la machine 5.

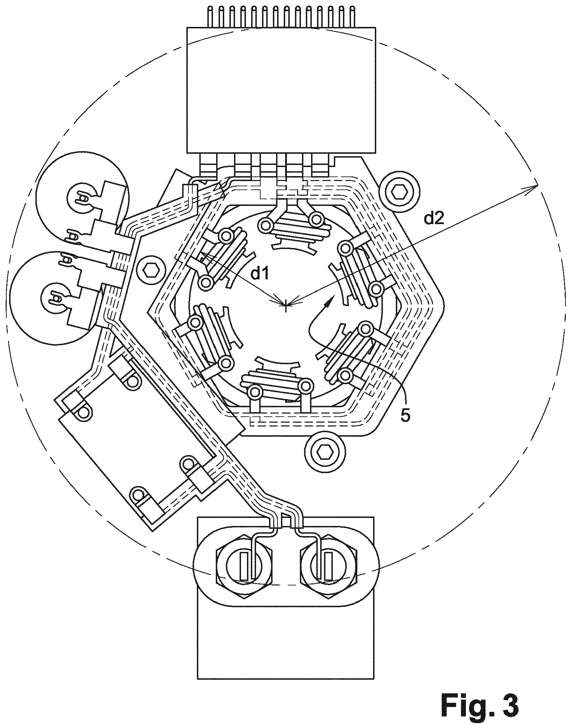

Les figures 2 et 3 représentent une vue partielle du compresseur de suralimentation 1 illustré en figure 1. Sur les figures 1 et 2, une vue partiellement en coupe du corps 301 est représentée pour rendre visible les conducteurs de phase 303u, 303v, 303w ou le conducteur d'alimentation 302.

Le corps 301 s'étend principalement suivant un plan, dit plan principal. Les connecteurs d'alimentation 302 et de phase 303u, 303v, 303w sont surmoulés au niveau de ce plan. Le plan principal du dispositif de connexion 3 est notamment perpendiculaire à l'axe de rotation de la machine 5. Ainsi, le dispositif de connexion 3 peut venir en appui contre une surface 6 du compresseur de suralimentation 1, dite surface de support, notamment une surface plane, pour y être plaqué. Notamment le corps 301 vient contre la surface de support 6. Le dispositif de connexion 3 peut comprendre des composants électriques, qui sont notamment connectés au conducteur d'alimentation 302. Ces composants électriques sont par exemple des condensateurs 701 pour stocker de l'énergie au plus proche du convertisseur de tension 2 ou une inductance de filtrage 702 pour filtrer l'énergie électrique circulant dans le conducteur d'alimentation 302. Lorsque le dispositif de connexion électrique 3 vient être plaqué contre la surface de support 6, les composants électriques 701, 702 peuvent venir se loger dans des cavités aménagées dans la surface de support 6. Cette surface de support 6 sert notamment de dissipateur thermique. En particulier, le module de puissance 201 est également supporté sur la même surface de support 6 côte-à-côte avec le dispositif de connexion 3, ce qui améliore l'intégration des composants dans le compresseur de suralimentation 1. Le module de puissance 201 peut être plaqué contre la surface de support 6 par un organe 202 en forme de plaque appuyant sur une surface du module de puissance 201 qui est opposée à la surface du module de puissance 201 qui est en contact avec la surface de support 6. A cet effet, l'organe de plaquage 202 peut être fixée à la surface de support 6 au niveau de deux extrémités opposées, notamment par vissage.

Le dispositif de connexion 3, en particulier le corps 301, s'étend autour de l'axe de rotation de la machine 5. Notamment, le dispositif de connexion 3, plus particulièrement le corps 301, peut s'étendre entre une première distance radiale d1 et une deuxième distance radiale d2 par rapport à l'axe de rotation de la machine 5. Ainsi, le dispositif de connexion 3 est compris dans une zone définie entre un disque interne et un disque externe ayant pour centre l'axe de rotation de la machine 5. Le dispositif de connexion 3 peut donc être placé dans le compresseur sans être gêné par rapport à l'arbre de la machine 5.

Dans les exemples illustrés en figure 1 à 3, le dispositif de connexion 3 peut comprendre une ouverture 304 dans lequel passe l'axe de rotation de la machine 5. En particulier cette ouverture 304 constitue un passage pour l'arbre de rotation 8 de la machine 5. Dans l'exemple illustré en figure 4, le corps 301 du dispositif de connexion 3 comprend un décrochement 305 dans lequel passe l'axe de rotation de la machine 5. En particulier, ce décrochement 305 constitue un passage pour l'arbre de rotation 8 de la machine 5.

Notamment, le compresseur de suralimentation 1 peut comprendre un boitier 9 qui comporte la roue de compression 10, la machine électrique 5 et le convertisseur de tension 2. Ce boitier 9 peut être en plusieurs parties qui se montent les unes sur les autres pour former le boitier 9. En particulier, le dispositif de connexion 3 est à l'intérieur du boitier 9 du compresseur de suralimentation 1. La deuxième distance radiale d2 est inférieure ou égale à la dimension interne dudit boitier 9 dans une direction perpendiculaire à l'axe de rotation de la machine 5.

La machine électrique 5 peut comprendre des bornes de phase uₙ, vₙ, wₙ, où n va de 1 à N, N désignant le nombre de bornes par phase. Les conducteurs de phase 303u, 303v, 303w sont positionnées entre les bornes de phase uₙ, vₙ, wₙ et les interrupteurs du convertisseur de tension 2 configurés pour contrôler l'énergie alimentant la machine électrique 5, qui sont notamment dans le module de puissance 201. Dans les exemples représentés en figures 1 à 3, il y a quatre bornes par phase/ Dans l'exemple illustré en figure 4, il y a une borne par phase. Les bornes de phase uₙ, vₙ, wₙ vont être connectées avec des bornes respectives des conducteurs de phase 303u, 303v, 303w, par exemple par sertissage, brasage ou soudage. Les bornes de phase uₙ, vₙ, wₙ sont en particulier positionnées autour de l'axe de rotation de la machine 5 à des intervalles angulaires réguliers. Les bornes de phase uₙ, vₙ, wₙ sont notamment positionnées suivant une circonférence autour de l'axe de rotation de la machine 5. Cette circonférence désigne une ligne fermée autour de l'axe de rotation de la machine 5. La circonférence suivant laquelle sont positionnés les bornes de phase uₙ, vₙ, wₙ est en particulier interne radialement par rapport au dispositif de connexion 3. Autrement dit, les bornes de phase uₙ, vₙ, wₙ sont positionnés à une distance radiale par rapport à l'axe de rotation de la machine électrique 5 qui est inférieure à la première distance radiale d1. Ces caractéristiques permettent d'assembler le dispositif de connexion 3 avec la machine électrique 5 de manière simple, avec une intégration des composants améliorée. En particulier, comme illustré en figure 1 à 3, les conducteurs de phase 303u, 303v, 303w peuvent comprendre chacun une portion s'étendant le long de l'ouverture 304 du corps 301 pour venir se relier aux bornes de phase uₙ, vₙ, wₙ qui passent à travers l'ouverture 304. Comme illustré en figure 4, les conducteurs de phase 303u, 303v, 303w peuvent être rectilignes entre le module de puissance 201 et les bornes de phase uₙ, vₙ, wₙ de la machine 5.

Dans l'exemple illustré en figure 1, un capot vient se positionner sur les bords de la surface de support 6 pour couvrir le convertisseur de tension 2 et fermer le boitier 9 du compresseur de suralimentation 1. Dans les vues présentées en figures 1 à 3, la roue de compression peut être sous la machine électrique 5, la machine électrique 5 se trouvant alors entre le convertisseur de tension 2 et la roue de compression 10. Le convertisseur de tension 2 est ainsi placé à une extrémité axiale du compresseur de suralimentation 1. Alternativement, la roue de compression 10 peut être au dessus du convertisseur de tension 2 comme illustré en figure 5. Autrement dit, le convertisseur de tension 2 peut être placé entre la machine électrique 5 et la roue de compression 10. Notamment le convertisseur de tension 2 est à une position le long de l'axe de rotation de la machine 5, cette position étant entre la machine électrique 5 et la roue de compression 10, c'est-à-dire entre une zone axiale correspondant à la machine électrique 5 et une zone axiale correspondant à la roue de compression 10.

L'invention n'est pas limitée aux exemples décrits précédemment.

## Revendications

1. Compresseur de suralimentation (1), notamment pour véhicule automobile, comprenant :
- une roue de compression de gaz (10) ;
- une machine électrique tournante (5) configurée pour entrainer la roue de compression de gaz (10) ;
- un convertisseur de tension (2) configuré pour alimenter ladite machine électrique (5) à partir d'un réseau électrique; **caractérisé par**
- un dispositif de connexion électrique (3) comprenant un conducteur d'alimentation (302) configuré pour relier électriquement le convertisseur de tension (2) avec le réseau électrique et au moins un conducteur de phase (303u, 303v, 303w) configuré pour relier électriquement le convertisseur de tension (2) à une phase de la machine électrique (5),
ledit dispositif de connexion (3) comprenant un corps (301) surmoulant ensemble ledit conducteur d'alimentation (302) et ledit conducteur de phase (303u, 303v, 303w).

2. Compresseur de suralimentation (1) selon la revendication 1, dans lequel le corps (301) du dispositif de connexion (3) s'étend principalement suivant un plan, dit plan principal, lesdits conducteurs d'alimentation (302) et de phase (303u, 303v, 303w) étant surmoulés au niveau de ce plan.

3. Compresseur de suralimentation (1) selon l'une des revendications précédentes, dans lequel le dispositif de connexion (3) s'étend autour de l'axe de rotation de la machine (5).

4. Compresseur de suralimentation (1) selon l'une des revendications précédentes, dans lequel le dispositif de connexion (3) s'étend entre une première distance radiale (d1) et une deuxième distance radiale (d2) par rapport à l'axe de rotation de la machine (5).

5. Compresseur de suralimentation (1) selon l'une des revendications précédentes, dans lequel le dispositif de connexion (3) comprend une pluralité de conducteurs de phase (303u, 303v, 303w), et la machine (5) comprend des bornes de phase (u₁, u₂, u₃, u₄, v₁, v₂, v₃, v₄, w₁, w₂, w₃, w₄) configurées pour être connectées avec les conducteurs de phase (303u, 303v, 303w), lesdites bornes de phase étant positionnées autour de l'axe de rotation de la machine (5).

6. Compresseur de suralimentation (1) selon la revendication précédente, dans lequel les bornes de phase sont positionnées suivant une circonférence autour de l'axe de la machine, ladite circonférence étant interne radialement par rapport audit dispositif de connexion (3).

7. Compresseur de suralimentation (1) selon l'une des revendications précédentes, dans lequel le convertisseur de tension (2) comprend un module de puissance (201) comportant des interrupteurs destinés à recevoir une énergie alimentant la machine électrique (5), le dispositif de connexion (3) et le module de puissance (201) étant deux pièces différentes supportées sur une même surface (6).

8. Compresseur de suralimentation (1) selon l'une des revendications précédentes, dans lequel le convertisseur de tension (2) est placé entre la machine électrique (5) et la roue de compression (10).

9. Compresseur de suralimentation (1) selon l'une des revendications 1 à 7, dans lequel le convertisseur de tension (2) est placé à une extrémité axiale du compresseur de suralimentation (1).

## Patentansprüche

1. Auflader (1), insbesondere für ein Kraftfahrzeug, umfassend:
- ein Gasverdichterrad (10);
- eine elektrische Drehmaschine (5), die eingerichtet ist, um das Gasverdichterrad (10) anzutreiben;
- einen Spannungswandler (2), der eingerichtet ist, um die elektrische Maschine (5) von einem elektrischen Netz zu speisen;
**gekennzeichnet durch**
- eine elektrische Anschlussvorrichtung (3), umfassend einen Zuführungsleiter (302), der eingerichtet ist, um den Spannungswandler (2) mit dem elektrischen Netz elektrisch zu verbinden, und mindestens einen Phasenleiter (303u, 303v, 303w), der eingerichtet ist, um den Spannungswandler (2) mit einer Phase der elektrischen Maschine (5) elektrisch zu verbinden,
wobei die Anschlussvorrichtung (3) einen Körper (301) umfasst, der den Zuführungsleiter (302) und den Phasenleiter (303u, 303v, 303w) aneinander anformt.

2. Auflader (1) nach Anspruch 1, bei dem sich der Körper (301) der Anschlussvorrichtung (3) hauptsächlich entlang einer Ebene, Hauptebene genannt, erstreckt, wobei der Zuführungs- (302) und Phasenleiter (303u, 303v, 303w) im Bereich dieser Ebene angeformt sind.

3. Auflader (1) nach einem der vorhergehenden Ansprüche, bei dem sich die Anschlussvorrichtung (3) um die Drehachse der Maschine (5) erstreckt.

4. Auflader (1) nach einem der vorhergehenden Ansprüche, bei dem sich die Anschlussvorrichtung (3) zwischen einem ersten Radialabstand (d1) und einem zweiten Radialabstand (d2) in Bezug zur Drehachse der Maschine (5) erstreckt.

5. Auflader (1) nach einem der vorhergehenden Ansprüche, bei dem die Anschlussvorrichtung (3) eine Vielzahl von Phasenleitern (303u, 303v, 303w) umfasst, und die Maschine (5) Phasenklemmen (u₁, u₂, u₃, u₄, v₁, v₂, v₃, v₄, w₁, w₂, w₃, w₄) umfasst, die eingerichtet sind, um an die Phasenleiter (303u, 303v, 303w) angeschlossen zu werden, wobei die Phasenklemmen um die Drehachse der Maschine (5) positioniert sind.

6. Auflader (1) nach dem vorhergehenden Anspruch, bei dem die Phasenklemmen entlang eines Umfangs um die Achse der Maschine positioniert sind, wobei der Umfang in Bezug zur Anschlussvorrichtung (3) radial innen ist.

7. Auflader (1) nach einem der vorhergehenden Ansprüche, bei dem der Spannungswandler (2) ein Leistungsmodul (201) umfasst, umfassend Schalter, die dazu bestimmt sind, Energie, die die elektrische Maschine (5) speist, zu empfangen, wobei die Anschlussvorrichtung (3) und das Leistungsmodul (201) zwei verschiedene Teile sind, die auf einer selben Oberfläche (6) getragen werden.

8. Auflader (1) nach einem der vorhergehenden Ansprüche, bei dem der Spannungswandler (2) zwischen der elektrischen Maschine (5) und dem Verdichterrad (10) angeordnet ist.

9. Auflader (1) nach einem der Ansprüche 1 bis 7, bei dem de Spannungswandler (2) an einem Axialende des Aufladers (1) angeordnet ist.

## Claims

1. Supercharger (1), in particular for a motor vehicle, comprising:
- a gas compression wheel (10);
- a rotating electrical machine (5) configured to drive the gas compression wheel (10);
- a voltage converter (2) configured to supply power to said electrical machine (5) from an electrical grid; **characterized by**
- an electrical connection device (3) comprising a power supply conductor (302) configured to electrically connect the voltage converter (2) to the electrical grid and at least one phase conductor (303u, 303v, 303w) configured to electrically connect the voltage converter (2) to a phase of the electrical machine (5),
said connection device (3) comprising a body (301) that overmoulds said power supply conductor (302) and said phase conductor (303u, 303v, 303w) together.

2. Supercharger (1) according to Claim 1, wherein the body (301) of the connection device (3) extends mainly in a plane, called main plane, said power supply conductor (302) and said phase conductor (303u, 303v, 303w) being overmoulded at this plane.

3. Supercharger (1) according to either of the preceding claims, wherein the connection device (3) extends about the axis of rotation of the machine (5).

4. Supercharger (1) according to one of the preceding claims, wherein the connection device (3) extends between a first radial distance (d1) and a second radial distance (d2) with respect to the axis of rotation of the machine (5) .

5. Supercharger (1) according to one of the preceding claims, wherein the connection device (3) comprises a plurality of phase conductors (303u, 303v, 303w), and the machine (5) comprises phase terminals (u₁, u₂, u₃, u₄, v₁, v₂, v₃, v₄, w₁, w₂, w₃, w₄) that are configured to be connected to the phase conductors (303u, 303v, 303w), said phase terminals being positioned about the axis of rotation of the machine (5).

6. Supercharger (1) according to the preceding claim, wherein the phase terminals are positioned along a circumference about the axis of the machine, said circumference being radially internal with respect to said connection device (3).

7. Supercharger (1) according to one of the preceding claims, wherein the voltage converter (2) comprises a power module (201) including switches that are intended to receive power supplying the electrical machine (5), the connection device (3) and the power module (201) being two different components supported on one and the same surface (6).

8. Supercharger (1) according to one of the preceding claims, wherein the voltage converter (2) is situated between the electrical machine (5) and the compression wheel (10).

9. Supercharger (1) according to one of Claims 1 to 7, wherein the voltage converter (2) is situated at an axial end of the supercharger (1).
